# EUROPEAN PATENT APPLICATION

(11) **EP 2 444 382 A1**
(43) Date of publication of application: **25.04.2012**
(21) Application number: 10789798.5
(22) Date of filing: 11.06.2010
(51) Int. Cl.: C05F 7/00

(54) **METHOD FOR PRODUCING AN ORGANIC MINERAL FERTILIZER MIXTURE**

(30) Priority: 15.06.2009 RU 2009122448
(71) Applicant: Zakpytoe Akcionernoe Obschestvo "Twin Trading Company", Moscow 119330 (RU)
(72) Inventor: ABRAMOV, Yakov Kuzmich, Moscow 109202 (RU); VESELOV, Vladimir Mihailovich, Moscow 123181 (RU); ZALEVSKY, Viktor Mihailovich, Moscow 125080 (RU); ARGUNOV, Nikolay Dmitrievich, Moscow 115446 (RU); BOGDANOVA, Lidija Petrovna, Moskovskaya obl. 142701 (RU); GUKASOV, Nikolay Aleksandrovich, Moscow 117246 (RU); EVDOKIMOV, Vladimir Dmitrievich, Moscow 127083 (RU); TAMURKA, Vitaly Grigor'evich, Moscow 109386 (RU); MOTOVILOVA, Ljubov' Viktorovna, Moskovskaya obl. 140032 (RU)
(74) Representative: Klemm, Rolf
(86) International application number: PCT/RU2010/000308
(87) International publication number: WO 2010/147503

(57) **Abstract**

The invention pertains to the field of agriculture, more specifically to methods for producing organic mineral fertilizer mixtures containing sewage sludge. The method comprises mixing sewage sludge with a detoxication agent that consists of sodium humate in the form of a finely-divided fraction having a particle size not exceeding 100 microns and in an amount representing at least 10% of the mass of the sludge. The invention can be used for increasing the efficiency of use of sewage sludge as fertilizer by reducing the heavy metal content thereof.

## Description

The present invention relates to agriculture and, in particular, to the methods used for producing fertilizers based on wastewater sludges.

Fertilizers produced of wastewater sludges and used for farming can become competitive among other agricultural fertilizers. The wastewater sludges contain 30-40% of fecal organic matter (on dry basis), mineral elements (Nₜₒₜₐₗ - 0.6-4.3%, P₂O₅ - 1.2-4.5% et al.) and possess high fertilizing ability.

The use of wastewater sludges as organic fertilizers contributes to recovering of mineral and organic balance of soil. The use of sludges when recultivating disturbed lands allows solving the problem of rich soil layers and returning them into economic circulation.

However, contamination of wastewater sludges by heavy metals and other toxicants restricts their utilization and makes them one of the most problematic wastes in the national economy.

There is a known process used to produce fertilizers based on wastewater sludges by reducing heavy metals contained in them using active sludge biomass and partially soluble calciferous mineral. Heavy metals are removed from aquatic medium as a result of mixing and phase separation using clarification method. Approximately 10-25 kg/m³ of calcium-containing material are added to the sludge, and mixing is performed with the help of aeration within 1-4 hours (RF Patent No. 2209237 CO2F11/14). However, the authors do not present any comparative data concerning both the efficiency of removal of heavy metals and utilization of heavy metals separated from aquatic medium.

There is also another known process for production of fertilizers that involves mixing of active sludge suspension with 0.5 - 5.0% biomass concentration on dry basis with peat at "active sludge - peat" ratio of 1:1 to 1:8, correspondingly. The active sludge is cultivated within 5 - 15 hours and its ash content is 15 - 45% (author's certificate N 1532551, CO 5F 7/00, CO 5F 11/12).

However, labile heavy metals can migrate to plants when wastewater sludges are being added to soil. There is no information in the above certificate about how high is a bonding strength of the heavy metals sorbed by peat.

The prototype refers to production method for mineral organic fertilizer mixture involving mixing of municipal wastewater sludges with mordenite-containing tuff used as detoxicant with fraction of up to 2 mm. Wastewater sludges with fractions of up to 5 mm are mixed with tuff at 1:1-2 ratio, accordingly (RP Patent No. 2197452 C 05 F 7/00). Detoxication of municipal wastewater sludges takes place due to high sorption properties of mordenite-containing tuff. Besides, in this case, when applying sludge fertilizers to agricultural land, desorption of heavy metals is quite possible that can result in exceeding admissible concentration limits. The authors do not provide any data about the presence of heavy metals in untreated sludges and after mordenite-containing tuff is used. There is also no data concerning the presence of heavy metals in plants.

The aim of the invention is to increase detoxication efficiency of wastewater sludges by making a bonding strength of the heavy metals with detoxicant higher, and at the same time making quality of the fertilizer mixture higher.

In the method involving mixing of wastewater sludges with detoxicant, the technical result is accomplished by using highly dispersed sodium humate with particles not larger than 100 µm and in quantity of not less than 10 % of the sludge mass.

The efficiency of using sodium humate is based on the fact that humic acids with a large number of their reactive functional groups enter into a reaction with heavy-metal ions forming their insoluble stable compounds.

Soluble salts of humic acids (humate) interact with heavy-metal cations forming water-soluble humates as it is shown below:

n Yᵤₘ-COONa + n Meⁿ⁺Xⁿ⁻ → [Yum-COOMe]ₙ↓+n NaX

The specified interaction is intensive and results in formation of insoluble stable compounds. Such relationship is common for the majority of heavy metals which are considered the most dangerous environmental pollutants: zinc, nickel, copper, lead, chrome et al. In addition to ion- exchange interaction, humic acids enter into complexation reactions with heavy metals forming mineral organic ligands that tightly fix heavy metals in their composition. Experiments have confirmed high time stability of the resulted compounds of heavy metals and humic acids.

Adding humates into fertilizer mixtures also allows to improve quality of the latter since the humates are plant growth and development regulators contributing to higher uptake intensity of mineral fertilizers.

The claimed method is confirmed by the following experimental examples:

### Example N 1

Wastewater sludge from the aeration station in Dzerzhinsk (Moscow region) is used as feedstock. In order to detoxicate it, sodium humate with 100 µm particles in quantity of not less than 10 % of the sludge mass is added and mixed in any mixer to obtain fully homogenized mixture. When mixing, sodium humate interacts with heavy metals from the sludge that become incapable of moving.

### Example N 2

The same procedure as described in Example N 1 except that the quantity of sodium humate used is 20 % of the sludge mass.

Results of the performed experiments to confirm the influence of sodium humate on the fixation of heavy metals are shown in the table below:

| **Description of heavy metal (HM)** | **Content of movable forms of heavy metals, mg/kg** | | |
|---|---|---|---|
| | **Untreated wastewater sludges** | **Wastewater sludges after treatment with sodium humate** | |
| | | **10%** | **20%** |
| Lead | 7.2 | 3.0 | 2.6 |
| Cadmium | 0.55 | 0.40 | 0.25 |
| Copper | 0.60 | 0.30 | abs. |
| Zinc | 115.0 | 12.4 | 8.3 |
| Manganese | 56.9 | 48.3 | 33.4 |
| Nickel | 3.6 | 1.5 | 0.3 |
| Chrome | 0.60 | abs. | abs. |

As it can be seen from the above table, the content of such heavy metals as lead, cadmium, copper, zinc, manganese, nickel and chrome is being reduced.

## Claims

1. The method used to produce mineral organic fertilizer mixture that involves mixing of municipal wastewater sludges with detoxicant, **characterized in that** highly dispersed sodium humate with particles not larger than 100 µm and in quantity of not less than 10 % of the sludge mass is used as the detoxicant.
